# EUROPEAN PATENT SPECIFICATION

(11) **EP 3 213 988 B1**
(45) Date of publication and mention of the grant of the patent: **08.05.2019**
(21) Application number: 16158219.2
(22) Date of filing: 02.03.2016
(51) Int. Cl.: F02M 21/02, B63H 5/125, B63B 17/00, F17C 13/08, B63B 35/66

(54) **SHIP WITH GAS FUELED ENGINE**
SCHIFF MIT GASBETRIEBENEM MOTOR
NAVIRE À MOTEUR FONCTIONNANT AU GAZ

(43) Date of publication of application: 06.09.2017
(73) Proprietor: BV Scheepswerf Damen Gorinchem, 4200 AA Gorinchem (NL)
(72) Inventor: Dukers, Emile Christian Jozef August, 3171 PR Poortugaal (NL); Watson, Raymond Frits Albert, 1501 SC Zaandam (NL)
(74) Representative: De Vries & Metman

(56) References cited:
- WO-A1-2008/000898
- WO-A1-2013/128063
- WO-A1-2014/086414
- WO-A1-2015/040268
- JP-A- 2008 105 448
- US-A- 3 863 460
- US-A1- 2003 146 214

## Description

WO 2014/086414 is related to an integrated dual-fuel feed circuit system for converted marine engines, using CNG gas extracted from the containers together with also the residual part called "heel", said gas being conveyed inside a treatment and conditioning unit of the skid-mounted type and being rendered utilisable as fuel. A skid mounted type product is one that is delivered off the shelf, ready to go, usually on skids, so that it can be sited on the workfloor/deck and pushed into its final position on the skids (or manipulated thereto with a forklift).

US 3,863,460 is related to a storage assembly that comprises a plurality of longitudinally extending containers that are rigidly fixed and independent with respect to each other and are sealed at each end thereof. An expansion vessel is interconnected commonly with all of the containers to receive expansion media from each of the containers. Means are connected commonly to all of the containers for discharging and filling each of the individual containers whereby the assembly is capable of handling a large capacity of liquified gases, liquids and the like.

WO 2008/000898 is related to a fuel system for a gas driven piston engine in a marine vessel, which gas is stored in at least one fuel storage tank in the vessel as liquefied gas. The fuel feeding system comprises a separate fuel feed tank in which the gas is in liquid phase and at elevated pressure. The gas is also in liquid phase in the fuel storage tank, in which, however, prevails only the hydrostatic pressure caused by the liquid gas.

US 2003/146214 is related to a mounting structure, for a plurality of high pressure gas vessels, has a block-shaped vessel mounting member with a high rigidity formed with accommodating portion for accommodating first neck portions formed at one sides of the plural high pressure gas vessels and vessel base-valves and formed with a gas flow passage that opens at openings of right and left side walls of the vessel mounting member to allow the accommodating portions to communicate with one another. The neck portions and the vessel base-valves at the one sides of the plural high pressure gas vessels are accommodated in the accommodating portions of the vessel mounting member, and the plural high pressure gas vessels are mounted in the vessel mounting member, enabling the gas flow passage, formed in the vessel mounting member, to serve as a high pressure conduit portion.

The invention concerns a ship comprising a hull with an uppermost watertight deck, a gas fueled engine for driving a propulsion means, the gas fueled engine includes a gas supply system, the ship further comprises pressure vessels for storing compressed gas and fuel piping for connecting the pressure vessels to the gas supply system. The pressure vessels are cylindrical and have a connection end and a support end.

In a known ship with pressure vessels suitable for compressed gas the pressure vessels are located above the uppermost watertight deck which creates during operation and use of the ship the risk of damaging the pressure vessels or the piping connected thereto, which is undesirable. In order to improve the safety of the use of the pressure vessels the pressure vessels are located in a tank storage room that is below the uppermost watertight deck, the connection end of the tank comprises fixing means to fix the connection end gas-tight against a separation wall between the tank storage room and a tank connection space and the support end comprises a support that is mounted in a linear bearing located in the tank storage room. The fixing means and the linear bearing are adapted such that sideway movements of the pressure vessels relative to the tank storage room are prevented. In this way the pressure vessels are located and fixed at both ends in the tank storage room and the pressure vessels and the high pressure gas lines connected thereto are safely stored below deck and changes in the length of the pressure vessels due to changing gas pressure in the pressure vessels and/or changing temperature of the gas in the pressure vessels or movements of the ship do not influence the piping in the tank connection space or the positioning of the pressure vessels in the tank storage room.

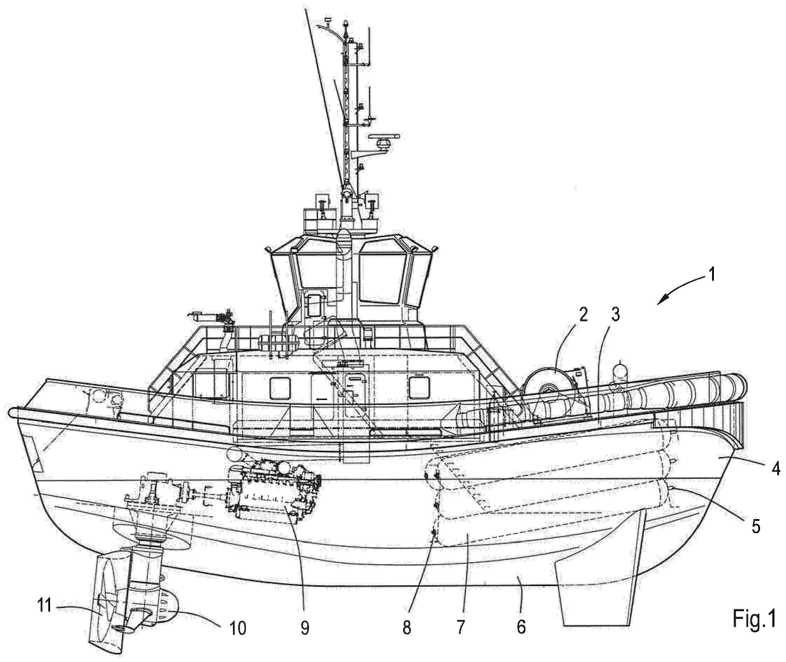

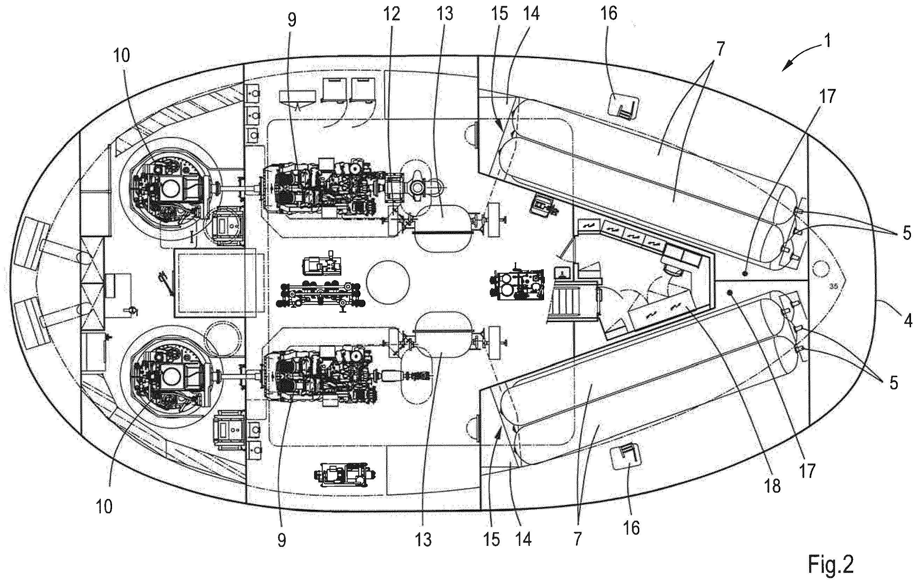

The invention further comprises an embodiment in accordance with claim 2. In this way the safety control system can generate a signal in case of gas leakage so that measures can be taken, such as closing the gas supply from the
The ship shown in figures 1, 2 and 3 is a tug 1 suitable for assisting larger ships when entering or leaving a harbor or when mooring. The tug 1 has a hull 6 with a bow 4 and a fore deck 3 and on the fore deck 3 a winch 2. The winch 2 is used for winding a cable (not shown) that can be connected to the larger ships. The tug 1 is powered by two engines 9 and each engine 9 drives an azimuting propulsion drive 10 that has a propeller 11. The engines 9 use natural gas as fuel, the natural gas is stored as compressed gas in pressure vessels 7 that are mounted in tank storage rooms 17 at starboard and port under the fore deck 3. The fore deck 3 is the uppermost watertight deck in the hull 6 so that the pressure vessels 7 are inside a watertight area of hull 6.

In other embodiments of a ship according to the invention the propulsion of the ship is different, for instance water jets can be used for the propulsion and/or gas turbines are used as engines. Also the number of engines can be only one or more than three.

The tank storage rooms 17 are accessible through entrance openings 16 and have an open connection with the ambient air or are ventilated to prevent pressure build up. At one end the pressure vessel 7 has a mounting flange 8 that is gas-tight mounted against a separation wall 15, the separation wall 15 separates the tank storage room 17 and a tank connection space 14. At the other end the pressure vessel 7 has a support shaft 5 that is mounted in a support (not shown). The support shaft 5 and the support together form a bearing that is designed to support the pressure vessel 7 and that can accommodate the longitudinal length change of the pressure vessel 7 caused by the different gas pressures when it is filled with natural gas of high pressure: the gas pressure in the pressure vessels may change during filling from 20 bar to 250 bar, or during filling even to 310 bar. The mounting flange 8 and the bearing prevent sideway or vertical movements of the pressure vessel 7 relative to the tug 1 when waves or other external forces cause the tug 1 to move jerkily.

The pressure vessels 7 are made from composite material that have an increase in length of for instance 0.03 meter at high pressure. In other embodiments there are steel pressure vessels 7 that might show a different increase in length. The bearing comprises a support shaft 5 that slides in a longitudinal bearing. In other embodiments, the longitudinal expansion can be accommodated in a bearing that comprises connecting rods that form a linkage. The four pressure vessels 7 mounted in each tank storage room 17 each have a storage volume of 6 m³. The pressure vessels 7, the gas lines and valves are designed for compressed natural gas (CNG). It will be clear that in other embodiments they might be made suitable for other gasses that can be used as fuel for engines, such as hydrogen or methane (originated from other sources than natural gas).

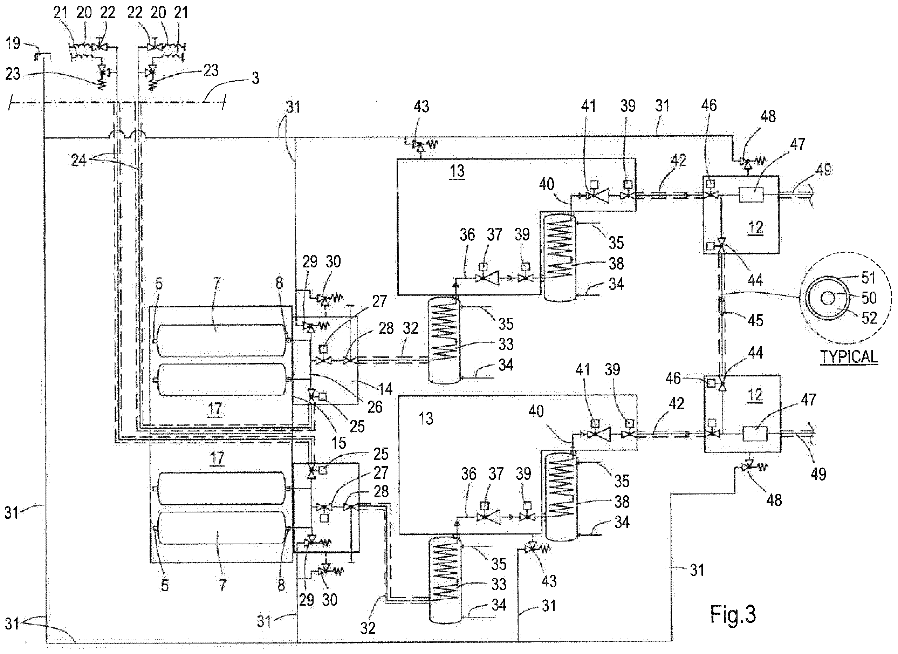

A gas supply system that comprises gas lines connects the pressure vessels 7 via the tank connection space 14, a gas conditioning space 13 and a gas regulating room 12 with the engine 9. The gas supply system with for each engine 9 a separate gas supply system is explained in more detail with the aid of figure 3. The operation of the gas supply system is controlled by a control system that comprises a control panel 18 and that is operated by the ship's operator. The control system comprises a safety control system and sensors to monitor inter alia gas pressures, gas temperatures and engine related information. Figure 3 shows the gas supply system and several safety related features.

In order to avoid dangerous situations, the various fittings such as valves and pressure regulators are located in gas-tight spaces, such as the tank connection space 14, the gas conditioning space 13 and the gas regulating room 12. These gas-tight spaces 12, 13, 14 are filled with an inert gas and in the gas-tight spaces are sensors (not shown) to monitor the gas pressure in these gas-tight spaces 12, 13, 14. If the gas pressure in one of the gas-tight spaces 12, 13, 14 increases or increases at a too high rate or decreases possibly at a too high rate, the safety control system will try to identify the cause, it will for instance determine that there is a leakage and identify the location of the leakage. After identifying the leakage location and possibly the leakage cause and the operational situation of the tug 1 the safety control system warns the operator and closes one or more remote controlled stop valves, that are specified hereafter, so that the gas supply to specific sections of the gas lines is stopped. The remote controlled stop valves are quick acting and close the flow of gas for instance in less than 0.2 second or in less than 0.1 second.

As the sections of the gas lines may contain gas at high pressure, leakage might continue for a short time and the gas pressure in the gas-tight space might increase further. When the gas pressure in a gas-tight space 12, 13, 14 increases above a safety level, a safety valve opens and the mixture of inert gas and natural gas flows to the ambient air through a blow off line 31 and a blow off outlet 19 that is located outside the hull 6 and above the fore deck 3. In other embodiments the blow off outlet 19 is at the side of the hull 6 or located high above the tug 1, for instance high above engine exhaust outlets in a mast. The location of the blow off outlet 19 is chosen so that the gas flows outside the hull 6 and no flammable gas-air mixture may be ignited.

Sections of the gas lines located outside the gas-tight spaces 12, 13, 14 and connecting the gas lines and valves in the gas-tight spaces 12, 13, 14 are provided with an inner wall 50, indicated with a single line in figure 3, and an outer wall 51, in figure 3 indicated with two interrupted lines. Between the inner wall and the outer wall is a gas-tight buffer space 52. In figure 3 a cross section shows the inner wall 50, the outer wall 51 and the buffer space 52. The outer wall is designed such that the outer wall can withstand the same maximum pressure as the inner wall. The gas-tight buffer space 52 is filled with a fluid such as inert gas at a pressure that is higher than the pressure of the ambient air and lower than the pressure of the gas in the gas line. In other embodiments the buffer space 52 is filled with a liquid. A pressure sensor monitors the pressure of the fluid such as gas in the gas-tight buffer space 52. An increase of the pressure in the gas-tight buffer space 52 means leakage of the inner wall 50, a decrease of the pressure in the gas-tight buffer space means leakage of the outer wall 51. Depending on the location of the section of the gas line, the operational situation of the tug 1 and whether the leakage is in the outer wall 51 or the inner wall 50, the safety control system closes (and possibly opens) one or more remote control valves and warns the operator.

Figure 3 shows two gas supply systems, one on the starboard side of the tug 1 and one on the port side of the tug 1. Each gas supply system connects to one engine 9 and might be connected to both engines 9 via a backup line 45. In another embodiment with one engine both gas supply system can supply gas to the engine. In a further embodiment the two gas supply systems provide gas to three or more engines.

The flanges 8 of the pressure vessels 7, located at either starboard or port of the tug 1 in separate tank storage rooms 17, are gas-tight mounted on the separation wall 15 that is part of the gas-tight tank connection space 14. A connection assembly 26 connects the pressure vessels 7. A remote operated master valve 27 connects via a manually operated stop valve 28 the connecting assembly 26 with a first gas line section 32. The connecting assembly 26 couples via a remote controlled filling valve 25, the filling line 24 and a manual filling valve 22 with a flexible filling line 20. The flexible filling line 20 is during filling coupled to a source of compressed gas in a filling station (not shown). The manual filling valve 22 is located outside the hull 6 for instance immediately above the fore deck 3, which means that it is outside the watertight area of the hull 6.

The filling line 24 has an inner wall that is enclosed by an outer wall and between the inner wall and the outer wall is a buffer space that is connected via a filling safety valve 33 with a flexible relief line 21. There might be a sensor (not shown) for detecting the gas pressure in the buffer space and/or activating the safety control system. If leakage of the inner wall occurs the leaking gas flows through the flexible relief line 21 to the filling station.

In the shown embodiment, the connecting assembly 26 is coupled directly with the pressure vessels 7. In other embodiments there might be a manually or remote operated stop valve between a pressure vessel 7 and the connecting assembly, so that one or more pressure vessel (s) 7 can be isolated. This can be done for safety reasons or for maintaining reserve fuel in one or more of the pressure vessels 7.

In order to prevent overpressure in the connecting assembly 26, a main line safety valve 29 connects the connecting assembly 26 to the blow off line 31. In order to prevent overpressure in the tank connection space 14, a tank connection space safety valve 30 connects the tank connection space 14 with the blow off line.

The first gas line section 32 comprises an inner wall 50 and an outer wall 51 and a gas-tight buffer space 52 with a sensor for detecting leakage. The natural gas flows through the first gas line section 32 and through a first heat exchanger 33 to a second gas line section 36 in the gas-tight gas conditioning space 13. The heating fluid enters the first heat exchanger 33 through a heating fluid inlet 35 and leaves the first heat exchanger 33 through a heating fluid outlet 34. In the first heat exchanger 33 is a sensor (not shown) that detects the level of the heating fluid in the first heat exchanger 33, detecting the level of heating fluid makes it possible to determine gas leakage from the piping in the first heat exchanger 33.

The first heat exchanger 33 heats the natural gas before it flows through a first pressure reducing valve 37. In the first pressure reducing valve 37 the gas pressure is reduced from the pressure in the pressure vessels 7 to approximately 50 bar or the gas flows without reducing through the first pressure reducing valve 37 if the gas pressure in the pressure vessel 7 is lower than 50 bar. The temperature of natural gas gets colder when its pressure is reduced and heating before reducing its pressure prevents that the gas gets too cold.

After leaving the first pressure reducing valve 37 the gas flows via a remote controlled stop valve 39 out of the gas conditioning space 13 through a second heat exchanger 38 that is more or less similar to the first heat exchanger 33. After leaving the second heat exchanger 38 the gas flows through a third gas line section 40 also located in the gas conditioning space 13 through a second pressure reducing valve 41 and a remote controlled stop valve 39 to a fourth gas line section 42. The second pressure reducing valve 41 reduces the gas pressure to the level that is required by the engine 9, which is approximately 10 bar. The fourth gas line section 42 has an inner wall 50 and an outer wall 51 and a gas-tight buffer space 52 with a sensor for detecting pressure changes so that the safety control system might detect leakage and take appropriate action.

The gas conditioning space 13 is gas-tight and filled with pressurize inert gas. The pressure of the inert gas is monitored by a sensor and the safety control system can detect leakage of the gas lines and valves located in the gas conditioning space 13 and take the required measures to maintain a safe situation. In case overpressure occurs a conditioning space safety valve 43 allows the mixture of leaked gas and inert gas to blow off through the blow off line 31 to the blow off outlet 19.

The gas flowing through the fourth gas line section 42 flows via a remote controlled stop valve 46 to a gas regulating valve 47 and from there to a motor supply line 49. The motor supply line 49 is coupled to the engine 9 and the gas regulating valve 47 determines the gas supply to the engine. A motor control system and/or the operator determines the setting of the gas regulating valve 47. The remote controlled stop valve 46 and the gas regulating valve 47 are located in the gas-tight gas regulating room 12 that is filled with inert gas. Also in the gas regulating room 12 is a backup connecting valve 44 that connects via a backup line 45 the gas supply to the gas regulating valve 47 of one of the engines 9 to the gas regulating valve 47 of the other engine 9. By closing one of the remote controlled valves 46 and opening both backup connecting valves 44 one gas supply system supplies the natural gas to both engines 9 so that both engines 9 remain in operation when one of the gas supply at one side of the tug 1 has to be switched off.

The gas regulating room 12 has a regulating room safety valve 48 connected to the blow off line 31 to prevent overpressure in the gas regulating room 12. The backup line 45 has an inner wall 50 and an outer wall 51 and a gas-tight buffer space 52 filled with inert gas whereby a sensor detects the pressure of the inert gas to detect a leakage in the inner wall 50 or the outer wall 51. In case of a leakage the safety control system initiates action to prevent dangerous situations.

As indicated above, the gas supply system includes many sensors that are monitored by the control system including the safety control system and many remote controlled valves to ensure safe operation. It will be obvious that the operator and the operating conditions have a major influence on the various actions that are taken. On the one hand it must be prevented that dangerous quantities of natural gas leak into the watertight area inside the hull 6 of the tug 1, on the other hand it is important that during operation the engines 9 remain under power to prevent that the tug 1 or the larger ship that the tug 1 assists come to damage.

The gas supply system shown in figure 3 has pressure vessels 7 with compressed gas as gas source. A similar gas supply system can be used with liquefied gas stored in cooled storage vessels as gas source. This means that the same gas lines, valves and safety system for the gas transport through the gas lines can also be used for supplying engines in ships or other vessels with a LNG gas supply. In case of LNG gas supply the gas lines may be partly filled with liquid, in that situation the same safety measures apply to prevent gas leakage into the watertight area of the hull.

The gas supply system is described as embodiment on a tug 1 to supply gas to an engine that drives the propulsion of the tug 1. In another embodiment the gas supply is for an engine on a vessel such as a barge, whereby the engine is used for power generation or for other purposes. In those types of vessels for safety reasons the leakage of gas into the watertight area of the hull must be prevented as well and the same safety control measures are required.

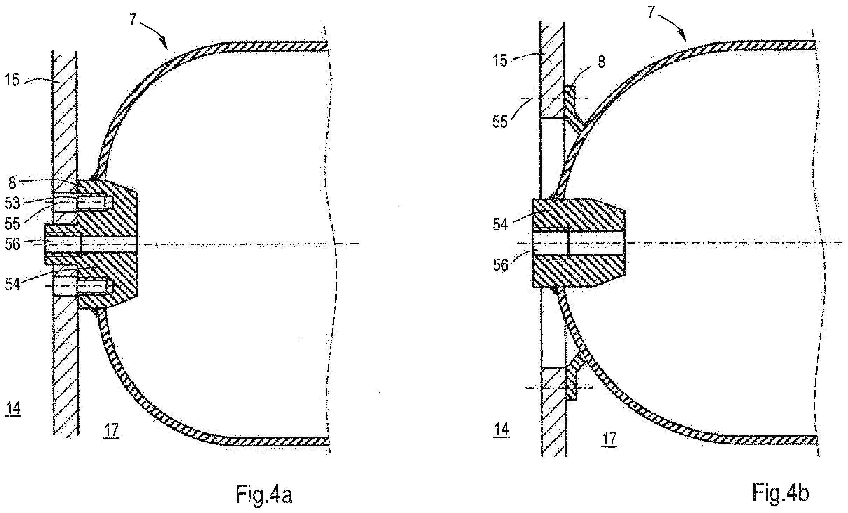

Figure 4 shows two embodiments of the fixing means for gas-tight fixing the pressure vessels 7 on the separation wall 15. Figure 4a shows the first embodiment whereby the pressure vessel 7 has an end boss 54 with a gas connection 56 and the end boss 54 is provided with threaded holes 53 with centerlines 55. In this embodiment the end boss 54 is also the flange 8 that is mounted in the separation wall 15. Figure 4b shows the second embodiment whereby the end boss 54 of the pressure vessel 7 projects through an opening in the separation wall 15 and a separate flange 8, that is fixed to the connection end of the pressure vessel 7 and that is bolted gas-tight on the separation wall 15.

## Claims

1. Ship (1) comprising a hull (6) with an uppermost watertight deck (3), a gas fueled engine (9) for driving a propulsion means, the gas fueled engine (9) includes a gas supply system, the ship (1) further comprises pressure vessels (7) for storing compressed gas and fuel piping for connecting the pressure vessels (7) to the gas supply system, the pressure vessels (7) are cylindrical and have a connection end and a support end wherein the pressure vessels (7) are located in a tank storage room (17) that is below the uppermost watertight deck (3), the connection end of the vessel (7) comprises fixing means to fix the connection end gas-tight against a separation wall (15) between the tank storage room (17) and a tank connection space (14) **characterized in that**
the support end comprises a support that is mounted in a linear bearing located in the tank storage room (17)
such that a longitudinal length change of the pressure vessel (7) can be accommodated, wherein the fixing means and the linear bearing are adapted such that sideway or vertical movements of the pressure vessels (7) relative to the tank storage room (17) are prevented.

2. Ship (1) in accordance with claim 1 wherein the tank connection space (14) comprises high pressure lines to connect a pressure vessel (7) to the fuel piping and to an above the uppermost watertight deck (3) located bunkering valve and wherein the tank connection space (14) forms a gas-tight space that is filled with inert gas under overpressure relative to ambient air and a sensor connected to a safety control system monitors the pressure in the tank connection space (14).

3. Ship (1) in accordance with claim 1 or 2 wherein the fuel piping connects the pressure vessel(s) (7) to a pressure reduction valve and the pressure reduction valve to the engine (9), whereby there might be more than one pressure reduction valves in line, and whereby the pressure reduction valve(s) is/are located in a gas conditioning room (13) and the gas conditioning room (13) forms a gas-tight space that is filled with inert gas under overpressure and a sensor connected to a safety control system monitors the pressure in the gas conditioning room (13).

4. Ship (1) in accordance with claim 2 or 3 wherein the safety control system is connected to a quick-closing valve that can close the supply of compressed gas from the pressure vessel(s) (7).

5. Ship (1) in accordance with one of the claims 2-4 wherein each gas-tight space has a safety valve to connect the gas-tight space to the ambient air.

6. Ship (1) in accordance with one of the previous claims wherein the ship (1) has at least two gas supply systems and at least two tank connection spaces (14), and might have a back-up line to couple the gas supply from one tank connection space (14) to at least two gas fueled engines (9).

7. Ship (1) in accordance with one of the claims 3-6 wherein a heat exchanger (33) is mounted in the fuel piping upstream of the or each pressure reduction valve.

8. Ship (1) in accordance with one of the previous claims wherein the pressure vessels (7) are made from composite material.

9. Ship (1) in accordance with one of the previous claims whereby the linear bearing comprises a cylindrical sliding end and a bearing with a bearing sleeve that supports the cylindrical sliding end.

10. Ship (1) in accordance with one of the previous claims whereby the linear bearing comprises connecting rods forming a linkage coupled to the ship.

11. Ship (1) in accordance with one of the previous claims wherein the fixing means comprise a flange (8) mounted centrally in the support end and whereby the flange (8) might be made from metal and might include threaded holes (53).

12. Ship (1) in accordance with one of the previous claims wherein the fixing means comprise a flange (8) mounted separately from a gas line connection at a center of the support end.

## Patentansprüche

1. Schiff (1), das einen Rumpf (6) mit einem obersten wasserdichten Deck (3), einen gasbetrieben Motor (9) zum Antreiben eines Antriebsmittels aufweist, wobei der gasbetriebene Motor (9) ein Gasversorgungssystem aufweist, das Schiff (1) ferner Druckbehälter (7) zum Speichern von Druckgas und ein Kraftstoffleitungssystem zum Verbinden des Druckbehälters (7) mit dem Gasversorgungssystem aufweist, die Druckbehälter (7) zylindrisch sind und ein Verbindungsende und ein Halteende aufweisen, wobei die Druckbehälter (7) in einem Tanklagerraum (17) angeordnet sind, der sich unter dem obersten wasserdichten Deck (3) befindet, das Verbindungsende des Behälters (7) Befestigungsmittel aufweist, um das Verbindungsende gasdicht an einer Trennwand (15) zwischen dem Tanklagerraum (17) und einem Tankverbindungsraum (14) zu befestigen, **dadurch gekennzeichnet, dass**
das Halteende eine Halterung aufweist, die in einem Linearlager angebracht ist, das im Tanklagerraum (17) angeordnet ist, so dass eine longitudinale Längenänderung des Druckbehälters (7) aufgenommen werden kann,
wobei das Befestigungsmittel und das Linearlager so eingerichtet sind, dass seitliche oder vertikale Bewegungen der Druckbehälter (7) relativ zum Tanklagerraum (17) verhindert werden.

2. Schiff (1) nach Anspruch 1, wobei der Tankverbindungsraum (14) Hochdruckleitungen aufweist, um einen Druckbehälter (7) mit dem Kraftstoffleitungssystem und mit einem über dem obersten wasserdichten Deck (3) angeordneten Bunkerventil zu verbinden, und wobei der Tankverbindungsraum (14) einen gasdichten Raum bildet, der mit einem Inertgas unter Überdruck relativ zur Umgebungsluft gefüllt ist, und ein Sensor, der mit einem Sicherheitssteuerungssystem verbunden ist, den Druck im Tankverbindungsraum (14) überwacht.

3. Schiff (1) nach Anspruch 1 oder 2, wobei das Kraftstoffleitungssystem den (die) Druckbehälter (7) mit einen Druckminderungsventil und das Druckminderungsventil mit dem Motor (9) verbindet, wobei es mehr als ein Druckminderungsventil in Reihe geben könnte, und wobei das (die) Druckminderungsventil(e) in einem Gasaufbereitungsraum (13) angeordnet sind und der Gasaufbereitungsraum (13) einen gasdichten Raum bildet, der mit einem Inertgas unter Überdruck gefüllt ist, und ein Sensor, der mit einem Sicherheitssteuerungssystem verbunden ist, den Druck im Gasaufbereitungsraum (13) überwacht.

4. Schiff (1) nach Anspruch 2 oder 3, wobei das Sicherheitssteuerungssystem mit einem schnellschließenden Ventil verbunden ist, das die Zufuhr von Druckgas aus dem (den) Druckbehälter(n) (7) schließen kann.

5. Schiff (1) nach einem der Ansprüche 2 bis 4, wobei jeder gasdichte Raum ein Sicherheitsventil aufweist, um den gasdichten Raum mit der Umgebungsluft zu verbinden.

6. Schiff (1) nach einem der vorhergehenden Ansprüche, wobei das Schiff (1) mindestens zwei Gasversorgungssysteme und mindestens zwei Tankverbindungsräume (14) aufweist, und eine Reserveleitung aufweisen könnte, um die Gaszufuhr von einem Tankverbindungsraum (14) mit mindestens zwei gasbetriebenen Motoren (9) zu koppeln.

7. Schiff (1) nach einem der Ansprüche 3 bis 6, wobei ein Wärmetauscher (33) im Kraftstoffleitungssystem stromaufwärts von dem oder von jedem Druckminderungsventil angebracht ist.

8. Schiff (1) nach einem der vorhergehenden Ansprüche, wobei die Druckbehälter (7) aus einem Verbundmaterial bestehen.

9. Schiff (1) nach einem der vorhergehenden Ansprüche, wobei das Linearlager ein zylindrisches Gleitende und ein Lager mit einer Lagerbuchse aufweist, die das zylindrische Gleitende hält.

10. Schiff (1) nach einem der vorhergehenden Ansprüche, wobei das Linearlager Verbindungsstangen aufweist, die ein Gestänge bilden, das mit dem Schiff gekoppelt ist.

11. Schiff (1) nach einem der vorhergehenden Ansprüche, wobei die Befestigungsmittel einen Flansch (8) aufweisen, der mittig im Halteende angebracht ist und wobei der Flansch (8) aus Metall bestehen könnte und Gewindelöcher (53) aufweisen könnte.

12. Schiff (1) nach einem der vorhergehenden Ansprüche, wobei die Befestigungsmittel einen Flansch (8) aufweisen, der getrennt von einer Gasverbindungsleitung an einer Mitte des Halteendes angebracht ist.

## Revendications

1. Navire (1) comprenant une coque (6) avec un pont étanche à l'eau le plus élevé (3), un moteur fonctionnant au gaz (9) pour entraîner un moyen de propulsion, le moteur fonctionnant au gaz (9) comporte un système d'alimentation en gaz, le navire (1) comprend en outre des récipients sous pression (7) pour stocker du gaz comprimé et une tuyauterie de combustible pour raccorder les récipients sous pression (7) au système d'alimentation en gaz, les récipients sous pression (7) sont cylindriques et ont une extrémité de raccordement et une extrémité de support, dans lequel les récipients sous pression (7) sont situés dans une salle de stockage de citerne (17) qui est en dessous du pont étanche à l'eau le plus élevé (3), l'extrémité de raccordement du récipient (7) comprend un moyen de fixation pour fixer l'extrémité de raccordement étanche au gaz contre une paroi de séparation (15) entre la salle de stockage de citerne (17) et un espace de raccordement de citerne (14), **caractérisé en ce que** l'extrémité de support comprend un support qui est monté dans une douille à billes située dans la salle de stockage de citerne (17) de façon à permettre un changement de longueur longitudinale du récipient sous pression (7),
dans lequel le moyen de fixation et la douille à billes sont adaptés de façon à empêcher des déplacements latéraux ou verticaux des récipients sous pression (7) par rapport à la salle de stockage de citerne (17).

2. Navire (1) selon la revendication 1, dans lequel l'espace de raccordement de citerne (14) comprend des conduites haute pression pour raccorder un récipient sous pression (7) à la tuyauterie de combustible et à une vanne de soutage située au-dessus du pont étanche à l'eau le plus élevé (3) et dans lequel l'espace de raccordement de citerne (14) forme un espace étanche au gaz qui est rempli de gaz inerte sous surpression par rapport à l'air ambiant et un capteur raccordé à un système de commande de sécurité surveille la pression dans l'espace de raccordement de citerne (14).

3. Navire (1) selon la revendication 1 ou 2, dans lequel la tuyauterie de combustible raccorde le ou les récipients sous pression (7) à une vanne de réduction de pression et la vanne de réduction de pression au moteur (9), moyennant quoi on peut avoir plus d'une vanne de réduction de pression en ligne, et moyennant quoi la ou les vannes de réduction de pression est/sont située(s) dans une salle de conditionnement de gaz (13) et la salle de conditionnement de gaz (13) forme un espace étanche au gaz qui est rempli de gaz inerte sous surpression et un capteur raccordé à un système de commande de sécurité surveille la pression dans la salle de conditionnement de gaz (13).

4. Navire (1) selon la revendication 2 ou 3, dans lequel le système de commande de sécurité est raccordé à une vanne à fermeture rapide qui peut fermer l'alimentation de gaz comprimé provenant du ou des récipients sous pression (7).

5. Navire (1) selon l'une des revendications 2 à 4, dans lequel chaque espace étanche au gaz a une vanne de sécurité pour raccorder l'espace étanche au gaz à l'air ambiant.

6. Navire (1) selon l'une des revendications précédentes, dans lequel le navire (1) a au moins deux systèmes d'alimentation en gaz et au moins deux espaces de raccordement de citerne (14), et peut avoir une conduite de secours pour accoupler l'alimentation en gaz d'un espace de raccordement de citerne (14) à au moins deux moteurs fonctionnant au gaz (9).

7. Navire (1) selon l'une des revendications 3 à 6, dans lequel un échangeur de chaleur (33) est monté dans la tuyauterie de combustible en amont de la ou de chaque vanne de réduction de pression.

8. Navire (1) selon l'une des revendications précédentes, dans lequel les récipients sous pression (7) sont réalisés en matériau composite.

9. Navire (1) selon l'une des revendications précédentes, moyennant quoi la douille à billes comprend une extrémité coulissante cylindrique et une douille avec un manchon de douille qui supporte l'extrémité coulissante cylindrique.

10. Navire (1) selon l'une des revendications précédentes, moyennant quoi la douille à billes comprend des bielles formant une tringlerie accouplée au navire.

11. Navire (1) selon l'une des revendications précédentes, dans lequel le moyen de fixation comprend une bride (8) montée au centre dans l'extrémité de support et moyennant quoi la bride (8) peut être réalisée en métal et peut comporter des trous filetés (53).

12. Navire (1) selon l'une des revendications précédentes, dans lequel le moyen de fixation comprend une bride (8) montée séparément d'un raccordement de conduite de gaz au niveau d'un centre de l'extrémité de support.
